# EUROPÄISCHE PATENTANMELDUNG

(11) **EP 4 768 758 A1**
(43) Veröffentlichungstag der Anmeldung: **01.07.2026**
(21) Anmeldenummer: 25224595.6
(22) Anmeldetag: 17.12.2025
(51) Int. Cl.: F16K 3/26, A47L 7/00, B23Q 11/00, F16L 37/00, A47L 9/24, F16K 31/44, A47L 9/00

(54) **DRUCKBEGRENZUNGSVORRICHTUNG**

(30) Priorität: 30.12.2024 DE 102024212327
(71) Anmelder: Robert Bosch GmbH, 70442 Stuttgart (DE)
(72) Erfinder: Fritz, Julia, 71229 Leonberg (DE); Coronado Miranda, Christian, 70771 Leinfelden-Echterdingen (DE)

(57) **Zusammenfassung**

Die Erfindung bezieht sich auf eine Druckbegrenzungsvorrichtung, insbesondere Druckbegrenzungsadapter, mit einem Gehäuse, mit einem ersten Luftöffnungselement (14) und mit einem zweiten Luftöffnungselement (16), wobei das erste Luftöffnungselement (14) an einem ersten Gehäuseteil (18) angeordnet ist, wobei das zweite Luftöffnungselement (16) an einem von dem ersten Gehäuseteil (18) verschiedenen zweiten Gehäuseteil (20) angeordnet ist. Es wird vorgeschlagen, dass die Druckbegrenzungsvorrichtung eine Luftdruckbegrenzungseinheit (22) zur Begrenzung eines Luftdrucks, insbesondere mittels dem ersten Gehäuseteil (18) und dem zweiten Gehäuseteil (20) aufweist.

## Beschreibung

Die Erfindung bezieht sich auf eine Druckbegrenzungsvorrichtung nach dem Oberbegriff des Anspruchs 1.

Grundsätzliche Druckbegrenzungsvorrichtungen sind aus dem Stand der Technik bekannt.

Der Erfindung liegt die Aufgabe zugrunde, mit einfachen konstruktiven Maßnahmen eine Druckbegrenzungsvorrichtung, insbesondere einen Druckbegrenzungsadapter, zu verbessern.

Die Aufgabe wird gelöst mit einer Druckbegrenzungsvorrichtung, insbesondere Druckbegrenzungsadapter, mit einem Gehäuse, mit einem ersten Luftöffnungselement und mit einem zweiten Luftöffnungselement, wobei das erste Luftöffnungselement an einem ersten Gehäuseteil angeordnet ist, wobei das zweite Luftöffnungselement an einem von dem ersten Gehäuseteil verschiedenen zweiten Gehäuseteil angeordnet ist.

Es wird vorgeschlagen, dass die Druckbegrenzungsvorrichtung eine Luftdruckbegrenzungseinheit zur Begrenzung eines Luftdrucks der Druckbegrenzungsvorrichtung, insbesondere mittels einem die Druckbegrenzungsvorrichtung bildenden ersten Gehäuseteil und zweiten Gehäuseteil.

Eine Druckbegrenzungsvorrichtung, insbesondere ein Druckbegrenzungsadapter, kann eine technische Komponente bilden, die dazu dient, einen Druck, insbesondere einen Überdruck und/oder einen Unterdruck, innerhalb eines Systems auf einen vorbestimmten Maximalwert zu begrenzen, um Schäden durch Überdruck zu verhindern. Die Vorrichtung kann darauf ausgelegt sein, in Systemen mit einem Luftstrom zu arbeiten, wobei der Luftdruck kontinuierlich überwacht und/oder reguliert werden kann. Die Druckbegrenzungsvorrichtung ist typischerweise aus einem Gehäuse gebildet, welches einen Einlass und einen Auslass für den Luftstrom aufweist, sowie einem internen Mechanismus, welcher den Druck misst/überwacht und bei Überschreiten eines festgelegten Grenzwertes überschüssige Luft abführt. Dies kann durch ein federbelastetes Ventil, eine Membran oder andere druckempfindliche Elemente erfolgen, die sich öffnen, um den Luftdruck anzupassen, insbesondere zu reduzieren oder zu erhöhen. Die Druckbegrenzungsvorrichtung kann zudem mit zusätzlichen Komponenten wie Drucksensoren, Regelventilen und Sicherheitsvorrichtungen ausgestattet sein, um eine präzise und zuverlässige Druckbegrenzung zu gewährleisten.

In diesem Zusammenhang kann sich ein erstes und/oder zweites Luftöffnungselement auf Komponenten innerhalb der Druckbegrenzungsvorrichtung beziehen, die den kontrollierten Ein- und Austritt des Luftstroms ermöglichen. Das erste Luftöffnungselement kann typischerweise den Einlass bilden, durch den die Luft in die Druckbegrenzungsvorrichtung eintritt. Das erste Luftöffnungselement kann mit einem Filter oder einem Rückschlagventil ausgestattet sein, um sicherzustellen, dass nur gereinigte Luft in das System gelangt und ein Rückfluss verhindert wird. Das zweite Luftöffnungselement kann den Auslass bilden, durch den die Luft nach der Druckregulierung wieder austritt. Das zweite Luftöffnungselement kann mit einem Ventil oder einer Drosselvorrichtung versehen sein, um den Luftstrom präzise zu steuern und sicherzustellen, dass der Druck innerhalb des Systems auf dem gewünschten Niveau gehalten wird. Beide Luftöffnungselemente bilden die Funktionalität der Druckbegrenzungsvorrichtung, indem sie den Luftstrom in und aus dem System regulieren und so zur Aufrechterhaltung eines sicheren und stabilen Betriebsdrucks beitragen. Das erste Luftöffnungselement kann an einer von dem zweiten Luftöffnungselement abgewandten Seite des Gehäuses angeordnet sein. Das erste Luftöffnungselement kann koaxial zu dem zweiten Luftöffnungselement angeordnet sein.

Das Gehäuse der Druckbegrenzungsvorrichtung kann aus, insbesondere genau, zwei separaten Gehäuseteilen gebildet sein. Das Gehäuse erstreckt sich entlang einer Längsachse. Das erste Gehäuseteil und/oder das zweite Gehäuseteil ist gegenüber der Längsachse (dreh-)beweglich gelagert. Das erste Gehäuseteil kann so gestaltet sein, dass es den Eintritt der Luft in die Druckbegrenzungsvorrichtung ermöglicht. Das zweite Gehäuseteil kann so gestaltet sein, dass es den Austritt der Luft aus der Druckbegrenzungsvorrichtung ermöglicht. Die Anordnung der Luftöffnungselemente an verschiedenen Gehäuseteilen ermöglicht eine effiziente und kontrollierte Führung des Luftstroms durch die Druckbegrenzungsvorrichtung. Diese räumliche Trennung der Einlass- und Auslasselemente trägt dazu bei, eine optimale Druckregulierung zu gewährleisten, indem sie den Luftstrom durch die verschiedenen internen Mechanismen der Vorrichtung leitet. Dadurch wird sichergestellt, dass der Luftdruck innerhalb der Vorrichtung effektiv überwacht und reguliert wird, was die Leistungsfähigkeit und Zuverlässigkeit des gesamten Systems verbessert.

In diesem Zusammenhang kann eine Luftdruckbegrenzungseinheit zur Begrenzung eines Luftdrucks der Druckbegrenzungsvorrichtung eine Komponente oder Baugruppe innerhalb der Druckbegrenzungsvorrichtung bilden, welche dazu ausgebildet ist, den Luftdruck auf einen vorbestimmten Maximalwert zu begrenzen und somit Überdrucksituationen zu verhindern. Diese Einheit umfasst typischerweise mehrere funktionale Elemente wie Drucksensoren, Regelventile und Steuermechanismen, die zusammenarbeiten, um den Luftdruck kontinuierlich zu überwachen und zu regulieren. Bei Erreichen oder Überschreiten des festgelegten Druckgrenzwertes aktiviert die Luftdruckbegrenzungseinheit automatisch Mechanismen, wie beispielsweise ein federbelastetes Ventil oder eine Membran, die überschüssige Luft abführen, um den Druck zu senken. Diese Einheit kann auch mit elektronischen Steuerungen und Alarmsystemen ausgestattet sein, um eine präzise und zuverlässige Druckbegrenzung zu gewährleisten und den Benutzer über kritische Druckverhältnisse zu informieren. Die Luftdruckbegrenzungseinheit ist ein zentrales Element der Druckbegrenzungsvorrichtung, das die Sicherheit und Effizienz des gesamten Systems gewährleistet, indem es den Luftdruck innerhalb sicherer Betriebsgrenzen hält. Die Luftdruckbegrenzungseinheit kann als eine Art Drucksensor, Regelventil, federbelastete(s) Ventil oder Membran, elektronische Steuerung, Alarmsysteme ausgebildet sein.

Es kann zweckmäßig sein, dass die Luftdruckbegrenzungseinheit zur Begrenzung eines Unterdrucks oder zur Begrenzung eines Überdrucks ausgebildet ist. Bei Erreichen eines kritischen Druckwertes kann die Luftdruckbegrenzungseinheit automatisch entsprechende Mechanismen aktivieren, wie Regelventile oder federbelastete Ventile, die entweder Luft ablassen, um Überdruck zu reduzieren, oder Luft einlassen, um Unterdruck auszugleichen. Durch diese umfassende Ausstattung stellt die Luftdruckbegrenzungseinheit sicher, dass der Luftdruck innerhalb der Vorrichtung stets innerhalb sicherer Betriebsgrenzen bleibt, wodurch die Integrität und Zuverlässigkeit des gesamten Systems verbessert und potenzielle Schäden durch Druckabweichungen verhindert werden.

Es kann zweckmäßig sein, dass die Luftdruckbegrenzungseinheit ein, insbesondere drittes, Luftöffnungselement zur Begrenzung eines Luftdrucks aufweist, wobei das erste Luftöffnungselement und/oder das zweite Luftöffnungselement gegenüber dem dritten Luftöffnungselement, insbesondere um mindestens 300%, vorzugsweise mehr als 400%, bevorzugt mehr als 600%, weiter bevorzugt mehr als 1000%, größer ist. Das erst Luftöffnungselement kann gegenüber dem zweiten Luftöffnungselement, insbesondere um mindestens 10%, vorzugsweise 20%, bevorzugt 30%, weiter bevorzugt um 40%, besonders bevorzugt 50%, größer und/oder, insbesondere um höchstens 120%, vorzugsweise 110%, bevorzugt 100%, weiter bevorzugt 90%, besonders bevorzugt 80%, kleiner sein. Im Detail bedeutet dies, dass die Luftdruckbegrenzungseinheit neben den primären Luftöffnungselementen, die als Einlass und Auslass fungieren, ein zusätzliches, drittes Luftöffnungselement enthält, das speziell zur Feinregulierung des Luftdrucks dient. Dieses dritte Luftöffnungselement ist deutlich kleiner dimensioniert als das erste und/oder zweite Luftöffnungselement, wobei die Größenunterschiede mindestens 300% betragen und vorzugsweise noch größer sind, um eine präzise Steuerung des Luftstroms zu gewährleisten. Die erheblich größere Dimensionierung des ersten und/oder zweiten Luftöffnungselements im Vergleich zum dritten Luftöffnungselement ermöglicht eine grobe Regulierung des Hauptluftstroms, während das kleinere dritte Luftöffnungselement eine feine Anpassung des Luftdrucks erlaubt. Diese Anordnung verbessert die Anpassungsfähigkeit der Vorrichtung an verschiedene Druckverhältnisse und erhöht die Genauigkeit der Druckregulierung. Durch die Kombination von unterschiedlich dimensionierten Luftöffnungselementen kann die Druckbegrenzungseinheit sowohl große Volumenströme effizient handhaben als auch feine Druckanpassungen vornehmen, was die Gesamtleistung und Vielseitigkeit der Druckbegrenzungsvorrichtung erheblich steigert.

Es kann zweckmäßig sein, dass die Luftdruckbegrenzungseinheit ein, insbesondere einstellbares, drittes und/oder viertes Luftöffnungselement aufweist, welches von den beiden, insbesondere das erste Luftöffnungselement und/oder das zweite Luftöffnungselement begrenzenden, Gehäuseteilen gebildet ist. Das dritte und/oder vierte Luftöffnungselement kann ein integraler Bestandteil der Gehäuseteile sein, die das erste und/oder zweite Luftöffnungselement umgeben. Das Gehäuse der Druckbegrenzungsvorrichtung kann derart gestaltet sein, dass es nicht nur die primären Luftöffnungselemente (Einlass und Auslass) umfasst, sondern auch ein zusätzliches, drittes und/oder viertes Luftöffnungselement integriert. Dieses dritte Luftöffnungselement wird direkt durch die Struktur der Gehäuseteile gebildet, die das erste und/oder zweite Luftöffnungselement begrenzen. Diese Bauweise ermöglicht eine kompakte und effiziente Anordnung der Luftöffnungselemente innerhalb der Vorrichtung, wodurch der Platzbedarf minimiert und die strukturelle Integrität erhöht wird. Die Gehäuseteile, die das erste und/oder zweite Luftöffnungselement umgeben, können derart gestaltet sein, dass sie ein drittes und/oder viertes Luftöffnungselement enthalten, welches flexibel angepasst werden kann, um den Luftstrom präzise zu regulieren. Diese Einstellbarkeit kann durch verschiedene Mechanismen erreicht werden, wie beispielsweise durch verschiebbare oder drehbare Teile innerhalb der Gehäuseteile, die die Größe der Öffnung verändern oder die Position des Luftstroms anpassen. Das dritte und/oder vierte Luftöffnungselement, das von den Gehäuseteilen gebildet wird, ermöglicht eine zusätzliche Ebene der Kontrolle über den Luftdruck innerhalb der Vorrichtung, indem es feinere Anpassungen des Luftstroms erlaubt. Das dritte und/oder vierte Luftöffnungselement kann dazu dienen, den Luftdruck innerhalb der Vorrichtung fein zu regulieren, indem es zusätzliche Wege für den Luftstrom bietet, die durch die Gehäuseteile selbst definiert werden. Diese Integration in die Gehäuseteile ermöglicht eine präzise Steuerung des Luftdrucks und verbessert die Gesamtfunktionalität der Druckbegrenzungsvorrichtung, indem sie eine nahtlose und effiziente Luftstromführung gewährleistet. Durch die geschickte Nutzung der Gehäuseteile zur Bildung des dritten Luftöffnungselements wird die Komplexität der Vorrichtung reduziert und gleichzeitig ihre Leistungsfähigkeit und Zuverlässigkeit erhöht.

Es kann zweckmäßig sein, dass das vierte Luftöffnungselement an das dritte Luftöffnungselement angepasst ist und/oder in zumindest einem Öffnungszustand einander überdecken bzw. überlappen und/oder in zumindest einem Schließzustand einander nicht überdecken bzw. nicht überlappen. Das vierte Luftöffnungselement kann derart gestaltet und/oder positioniert sein, dass es in einer bestimmten Weise mit dem dritten Luftöffnungselement interagiert. Diese Anpassung kann darin bestehen, dass die beiden Luftöffnungselemente in einem Öffnungszustand teilweise oder vollständig übereinander liegen bzw. sich überlappen, wodurch ein gemeinsamer Luftstromkanal entsteht, der den Luftdurchfluss ermöglicht oder verstärkt. In einem Schließzustand hingegen sind die beiden Luftöffnungselemente so angeordnet, dass sie sich nicht überdecken oder überlappen, wodurch der Luftstrom unterbrochen oder stark eingeschränkt wird. Diese Konfiguration erlaubt eine präzise Steuerung des Luftdrucks, indem der Luftstrom je nach Bedarf geöffnet oder geschlossen werden kann. Die Möglichkeit, die Luftöffnungselemente in verschiedenen Zuständen zu positionieren, bietet eine hohe Flexibilität bei der Druckregulierung und ermöglicht es, den Luftdruck innerhalb der Vorrichtung genau zu steuern. Diese Anordnung trägt zur Effizienz und Funktionalität der Druckbegrenzungsvorrichtung bei, indem sie eine nahtlose Anpassung an unterschiedliche Betriebsbedingungen ermöglicht und die Leistungsfähigkeit des Systems optimiert.

Es kann zweckmäßig sein, dass die Luftdruckbegrenzungseinheit, insbesondere das dritte und/oder vierte Luftöffnungselement, zwischen dem ersten Luftöffnungselement und dem zweiten Luftöffnungselement angeordnet ist. Dadurch kann mittels einer spezifischen Anordnung der Luftöffnungselemente innerhalb einer Druckbegrenzungsvorrichtung, die eine optimierte Steuerung des Luftstroms ermöglicht werden. Die Luftdruckbegrenzungseinheit kann derart ausgebildet sein, dass das dritte und/oder vierte Luftöffnungselement räumlich zwischen dem ersten Luftöffnungselement, das typischerweise als Einlass dient, und dem zweiten Luftöffnungselement, das als Auslass fungiert, positioniert ist. Diese Anordnung ermöglicht eine gestaffelte und kontrollierte Führung des Luftstroms durch die Vorrichtung. Das dritte und/oder vierte Luftöffnungselement kann dabei als zusätzliche Regelstufe fungieren, die den Luftdruck weiter präzisiert, bevor die Luft den Auslass erreicht. Durch die Platzierung dieser zusätzlichen Luftöffnungselemente zwischen Einlass und Auslass wird eine feinere Abstimmung des Luftdrucks innerhalb der Vorrichtung ermöglicht, was zu einer verbesserten Druckregulierung führt. Diese Konfiguration trägt zur Effizienz und Funktionalität der Druckbegrenzungsvorrichtung bei, indem sie eine gleichmäßige Verteilung des Luftdrucks sicherstellt und die Möglichkeit bietet, den Luftstrom in mehreren Stufen zu kontrollieren.

Es kann zweckmäßig sein, dass das Verschlusselement als das erste Gehäuseteil ausgebildet ist, wobei das erste Gehäuseteil gegenüber dem zweiten Gehäuseteil (dreh-)beweglich gelagert und überlappend angeordnet ist. Dadurch wird eine spezifische Konstruktion innerhalb einer Druckbegrenzungsvorrichtung bereitgestellt, bei der das Verschlusselement integraler Bestandteil des Gehäuses ist und eine bewegliche Funktion zur Steuerung des Luftstroms erfüllt. Im Detail bedeutet dies, dass das Verschlusselement nicht als separates Bauteil, sondern als das erste Gehäuseteil selbst ausgebildet ist. Dieses erste Gehäuseteil ist so konstruiert, dass es gegenüber dem zweiten Gehäuseteil beweglich gelagert ist, wobei die Bewegung vorzugsweise eine Drehbewegung umfasst. Diese drehbewegliche Lagerung ermöglicht es, das erste Gehäuseteil relativ zum zweiten Gehäuseteil zu drehen, wodurch sich die Position der Luftöffnungselemente und damit der Luftstrom innerhalb der Vorrichtung verändern lässt. Die überlappende Anordnung der beiden Gehäuseteile stellt sicher, dass sie in bestimmten Positionen teilweise oder vollständig übereinander liegen, was eine präzise Steuerung des Luftstroms ermöglicht. Durch Drehen des ersten Gehäuseteils kann der Benutzer den Luftstrom öffnen oder schließen, indem er die Überlappung der Luftöffnungselemente verändert. Diese Konstruktion bietet eine robuste und zuverlässige Methode zur Regelung des Luftdrucks, da sie die Anzahl der beweglichen Teile minimiert und die strukturelle Integrität der Vorrichtung erhöht. Die Integration des Verschlusselements in das Gehäuse selbst vereinfacht die Bauweise und verbessert die Benutzerfreundlichkeit, da der Bediener den Luftdruck durch einfache Drehbewegungen des Gehäuseteils steuern kann. Diese Anordnung trägt zur Effizienz und Funktionalität der Druckbegrenzungsvorrichtung bei, indem sie eine flexible und präzise Anpassung an unterschiedliche Betriebsbedingungen ermöglicht.

Es kann zweckmäßig sein, dass das erste Luftöffnungselement dazu vorgesehen ist, mit einer Unterdruckerzeugungseinheit, insbesondere einer Saugvorrichtung, verbunden zu sein und/oder dass das zweite Luftöffnungselement dazu vorgesehen ist, mit einer Überdruckerzeugungseinheit, insbesondere einer Pumpvorrichtung, verbunden zu sein. Dadurch kann eine spezifische Funktionalität und Anschlussmöglichkeit der Luftöffnungselemente innerhalb einer Druckbegrenzungsvorrichtung bereitgestellt werden, die eine vielseitige Anwendung in verschiedenen Drucksystemen ermöglicht. Das erste Luftöffnungselement kann derart ausgebildet sein, dass es eine Verbindung zu einer Unterdruckerzeugungseinheit, wie beispielsweise einer Saugvorrichtung, herstellen kann. Diese Verbindung ermöglicht es, Luft aus dem System zu entfernen, wodurch ein Unterdruck erzeugt wird, der für bestimmte Anwendungen erforderlich sein kann. Gleichzeitig ist das zweite Luftöffnungselement dafür vorgesehen, mit einer Überdruckerzeugungseinheit, wie einer Pumpvorrichtung, verbunden zu werden. Diese Verbindung erlaubt es, Luft in das System zu pumpen, um einen Überdruck zu erzeugen, der ebenfalls für verschiedene Anwendungen notwendig sein kann. Durch die Möglichkeit, das erste Luftöffnungselement mit einer Saugvorrichtung und das zweite Luftöffnungselement mit einer Pumpvorrichtung zu verbinden, bietet die Druckbegrenzungsvorrichtung eine hohe Flexibilität und Anpassungsfähigkeit an unterschiedliche Betriebsbedingungen. Diese Konfiguration ermöglicht eine präzise Steuerung des Luftdrucks innerhalb der Vorrichtung, indem sie sowohl Unterdruck- als auch Überdrucksituationen effektiv handhaben kann. Die spezifische Auslegung der Luftöffnungselemente für den Anschluss an entsprechende Druckerzeugungseinheiten trägt zur Effizienz und Vielseitigkeit der Druckbegrenzungsvorrichtung bei, indem sie eine nahtlose Integration in verschiedene Drucksysteme ermöglicht und die Leistungsfähigkeit des gesamten Systems optimiert.

Die Erfindung bezieht sich ferner, auf ein System aus einer Druckbegrenzungsvorrichtung, einer Unterdruckerzeugungseinheit, insbesondere einer Saugvorrichtung, und einem Saugschlauchelement zur strömungstechnischen Verbindung der Druckbegrenzungsvorrichtung mit der Saugvorrichtung.

Die Erfindung bezieht sich ferner, auf ein System aus einer Druckbegrenzungsvorrichtung, einer Überdruckerzeugungseinheit, insbesondere einer Pumpvorrichtung, und einem Pumpschlauchelement zur strömungstechnischen Verbindung der Druckbegrenzungsvorrichtung mit der Pumpvorrichtung.

### Kurze Beschreibung der Zeichnungen

Weitere Vorteile ergeben sich aus der folgenden Zeichnungsbeschreibung. In der Zeichnung können Weiterbildungen der Erfindung dargestellt sein. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Hierbei zeigt:
- Fig. 1: eine schematische Ansicht auf ein System aus einer Druckbegrenzungsvorrichtung, einer Handwerkzeugmaschine und einer Unterdruckerzeugungseinheit,
- Fig. 2: eine Seitenansicht der Druckbegrenzungsvorrichtung und
- Fig. 3: ein Schnitt durch die Druckbegrenzungsvorrichtung

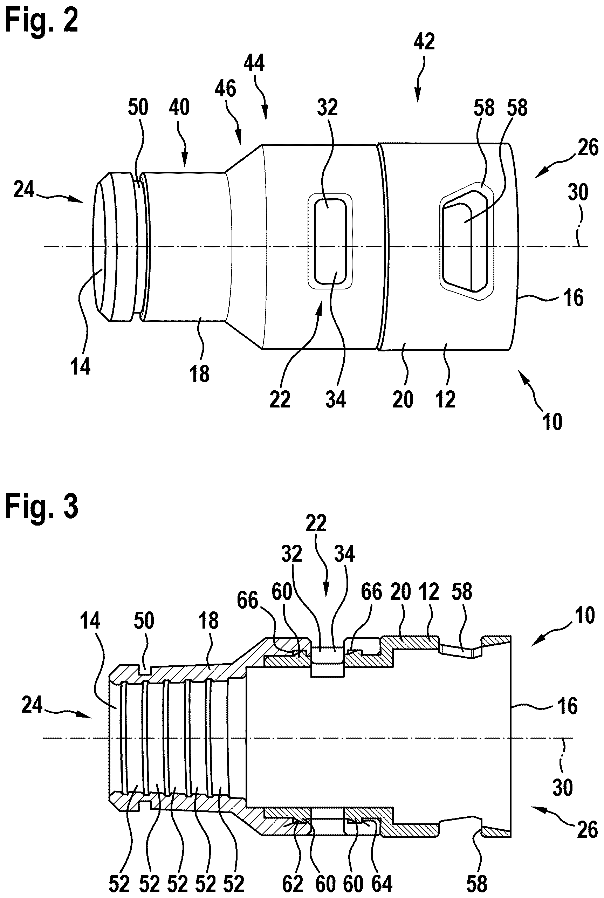

Fig. 2 und Fig. 3 zeigen eine als Druckbegrenzungsadapter ausgebildete Druckbegrenzungsvorrichtung 10, die ein Gehäuse 12, ein erstes Luftöffnungselement 14 und ein zweites Luftöffnungselement 16 umfasst. Das erste Luftöffnungselement 14 ist an einem ersten Gehäuseteil 18 und das zweite Luftöffnungselement 16 an einem von dem ersten Gehäuseteil 18 verschiedenen zweiten Gehäuseteil 20 angeordnet. Die Druckbegrenzungsvorrichtung 10 umfasst eine Luftdruckbegrenzungseinheit 22 zur Begrenzung eines Luftdrucks der Druckbegrenzungsvorrichtung 10 mittels des die Druckbegrenzungsvorrichtung 10 bildenden ersten und zweiten Gehäuseteils 18, 20.

Eine Druckbegrenzungsvorrichtung 10 bildet eine technische Komponente, die dazu dient, einen Druck, insbesondere einen Überdruck und/oder einen Unterdruck, innerhalb eines Systems auf einen vorbestimmten Maximalwert zu begrenzen, um Schäden durch Überdruck zu verhindern. Die Vorrichtung 10 ist darauf ausgelegt, in Systemen mit einem Luftstrom zu arbeiten. Die Druckbegrenzungsvorrichtung 10 ist aus einem Gehäuse 12 gebildet, welches einen Einlass 24 und einen Auslass 26 für den Luftstrom aufweist, sowie einem Mechanismus 28.

Das erste und zweite Luftöffnungselement 14, 16 ermöglichen einen kontrollierten Ein- und Austritt des Luftstroms. Das erste Luftöffnungselement 14 bildet den Einlass 24, durch den die Luft in die Druckbegrenzungsvorrichtung 10 eintritt. Das zweite Luftöffnungselement 16 bildet den Auslass 26, durch den die Luft nach der Druckregulierung wieder austritt. Die Luftdruckbegrenzungseinheit 22 steuert den Luftstrom und stellt sicher, dass der Druck innerhalb der Druckbegrenzungsvorrichtung 10 auf dem gewünschten Niveau gehalten wird. Beide Luftöffnungselemente 14, 16 regulieren den Luftstrom in und aus dem System. Das erste Luftöffnungselement 14 ist an einer von dem zweiten Luftöffnungselement 16 abgewandten Seite des Gehäuses 12 koaxial zu dem zweiten Luftöffnungselement 16 angeordnet.

Das Gehäuse 12 der Druckbegrenzungsvorrichtung 10 besteht aus genau zwei separaten Gehäuseteilen 18, 20 und erstreckt sich entlang einer Längsachse 30. Das erste Gehäuseteil 18 und/oder das zweite Gehäuseteil 20 ist gegenüber der Längsachse 30 drehbeweglich gelagert. Das erste Gehäuseteil 18 ermöglicht den Eintritt der Luft in die Druckbegrenzungsvorrichtung 10, während das zweite Gehäuseteil 20 den Austritt der Luft aus der Druckbegrenzungsvorrichtung 10 ermöglicht. Die Anordnung der Luftöffnungselemente 14, 16 an verschiedenen Gehäuseteilen 18, 20 ermöglicht eine effiziente und kontrollierte Führung des Luftstroms durch die Druckbegrenzungsvorrichtung 10.

Die Luftdruckbegrenzungseinheit 22 zur Begrenzung eines Luftdrucks der Druckbegrenzungsvorrichtung 10 bildet eine Komponente oder Baugruppe innerhalb der Druckbegrenzungsvorrichtung 10, welche dazu ausgebildet ist, den Luftdruck auf einen vorbestimmten Maximalwert zu begrenzen und somit Überdrucksituationen zu verhindern. Die Luftdruckbegrenzungseinheit 22 ist als eine Art Regelventil ausgebildet. Die Luftdruckbegrenzungseinheit 22 ist zur Begrenzung eines Unterdrucks ausgebildet.

Die Luftdruckbegrenzungseinheit 22 weist ein drittes Luftöffnungselement 32 zur Begrenzung eines Luftdrucks auf, wobei das erste Luftöffnungselement 14 und das zweite Luftöffnungselement 16 gegenüber dem dritten Luftöffnungselement 32, insbesondere um mindestens 300% größer ist. Das erste Luftöffnungselement 14 ist gegenüber dem zweiten Luftöffnungselement 16 um mindestens 50% größer und um höchstens 80% kleiner. Die Luftdruckbegrenzungseinheit 22 enthält neben den primären Luftöffnungselementen 14, 16, die als Einlass 24 und Auslass 26 fungieren, ein zusätzliches, drittes Luftöffnungselement 32, das speziell zur Feinregulierung des Luftdrucks ausgebildet ist. Dieses dritte Luftöffnungselement 32 ist deutlich kleiner dimensioniert als das erste und/oder zweite Luftöffnungselement 14, 16.

Die Luftdruckbegrenzungseinheit 22 weist ein einstellbares drittes und viertes Luftöffnungselement 32, 34 auf, welches von den beiden das erste Luftöffnungselement 14 und das zweite Luftöffnungselement 16 begrenzenden Gehäuseteilen 18, 20 gebildet ist. Das dritte und vierte Luftöffnungselement 32, 34 ist ein integraler Bestandteil der Gehäuseteile 18, 20, die das erste und zweite Luftöffnungselement 14, 16 umgeben. Das Gehäuse 12 der Druckbegrenzungsvorrichtung 10 in Fig. 3 ist derart gestaltet, dass es nicht nur die primären Luftöffnungselemente 14, 16 (Einlass 24 und Auslass 26) umfasst, sondern auch ein zusätzliches, drittes und/oder viertes Luftöffnungselement 32, 34 integriert. Dieses dritte und vierte Luftöffnungselement 32, 34 wird direkt durch die Struktur der Gehäuseteile 18, 20 und sind jeweils als Ausnehmungen im Gehäuse 12 gebildet. Die Gehäuseteile 18, 20, die das erste und/oder zweite Luftöffnungselement 14, 16 umgeben, sind derart gestaltet, dass sie jeweils ein Ausnehmungen für das dritte und das vierte Luftöffnungselement 32, 34 enthalten, welche flexibel angepasst werden können, um den Luftstrom präzise zu regulieren. Diese Einstellbarkeit wird durch drehbare Gehäuseteile 18, 20 ermöglicht, indem die Größe einer von dem dritten und dem vierten Luftöffnungselement 32, 34 begrenzenden Öffnung verändert oder die Position des Luftstroms angepasst wird.

Das vierte Luftöffnungselement 34 ist an das dritte Luftöffnungselement 32 angepasst und in zumindest einem Öffnungszustand einander überdecken bzw. überlappen und/oder in zumindest einem Schließzustand einander nicht überdecken bzw. nicht überlappen. In Fig. 2 bzw. Fig. 3 ist die Druckbegrenzungsvorrichtung 10 in einem vollständig geöffneten Öffnungszustand dargestellt. Dabei ist das dritte Luftöffnungselement 32 direkt unterhalb des vierten Luftöffnungselements 34 angeordnet. Beide Öffnungen überdecken sich vollständig. Dabei sind diese Öffnung übereinander derart angeordnet dass eine gemeinsame Öffnung gebildet wird. ist ein Das vierte Luftöffnungselement 34 ist derart gestaltet und positioniert, dass es in einer bestimmten Weise mit dem dritten Luftöffnungselement 32 interagiert. Diese Anpassung besteht darin, dass die beiden Luftöffnungselemente 32, 34 in einem Öffnungszustand teilweise oder vollständig übereinander liegen bzw. sich überlappen, wodurch ein gemeinsamer Luftstromkanal entsteht, der den Luftdurchfluss ermöglicht oder verstärkt. In einem Schließzustand hingegen sind die beiden Luftöffnungselemente 32, 34 so angeordnet, dass sie sich nicht überdecken oder überlappen, wodurch der Luftstrom unterbrochen oder stark eingeschränkt wird.

Das dritte und vierte Luftöffnungselement 32, 34 ist zwischen dem ersten Luftöffnungselement 14 und dem zweiten Luftöffnungselement 16 angeordnet.

Das erste Gehäuseteil 18 ist vorliegend als ein Verschlusselement ausgebildet, wobei das erste Gehäuseteil 18 gegenüber dem zweiten Gehäuseteil 20 drehbeweglich gelagert und überlappend angeordnet ist. Dieses erste Gehäuseteil 18 ist so konstruiert, dass es gegenüber der Längsachse 30 der Druckbegrenzungsvorrichtung 10 gegenüber dem zweiten Gehäuseteil 20 beweglich gelagert ist. Diese drehbewegliche Lagerung ermöglicht es, das erste Gehäuseteil 18 relativ zum zweiten Gehäuseteil 20 zu drehen, wodurch sich die Position der Luftöffnungselemente 14, 16 und damit der Luftstrom innerhalb der Vorrichtung 10 verändern lässt. Die überlappende Anordnung der beiden Gehäuseteile 18, 20 stellt sicher, dass sie in bestimmten Positionen teilweise oder vollständig übereinander liegen, was eine präzise Steuerung des Luftstroms ermöglicht. Durch Drehen des ersten Gehäuseteils 18 öffnet oder schließt der Benutzer den Luftstrom, indem er die Überlappung der Luftöffnungselemente 14, 16 verändert. Die Integration des Verschlusselements in das Gehäuse 12 selbst vereinfacht die Bauweise und verbessert die Benutzerfreundlichkeit, da der Bediener den Luftdruck durch einfache Drehbewegungen des Gehäuseteils 18 steuern kann.

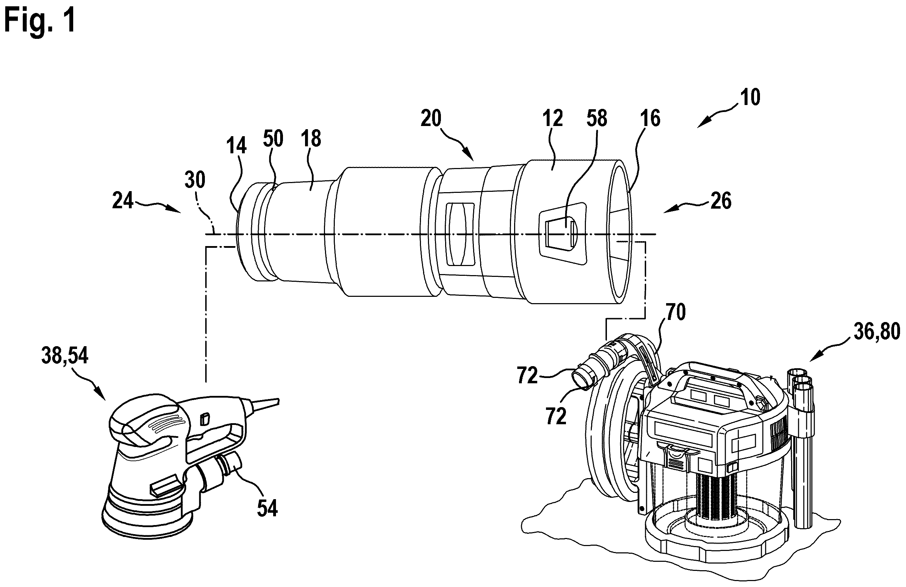

Das erste Luftöffnungselement 14 ist dazu vorgesehen, die Druckbegrenzungsvorrichtung 10 mit einer als eine Saugvorrichtung ausgebildeten Unterdruckerzeugungseinheit 36 zu verbinden (Fig. 1). Das zweite Luftöffnungselement 16 ist dazu vorgesehen, die Druckbegrenzungsvorrichtung 10 mit einer Handwerkzeugmaschine 38, wie beispielsweise einer Schleifmaschine oder einem Bohrhammer, zu verbinden (Fig. 1).

Das Gehäuse 12 weist einen an dem ersten Gehäuseteil 18 angeordneten ersten Schnittstellenabschnitt 40 auf, welcher das erste Luftöffnungselement 14 umfasst. Das Gehäuse 12 weist einen von dem ersten Schnittstellenabschnitt 40 abgewandten und an dem zweiten Gehäuseteil 20 angeordneten zweiten Schnittstellenabschnitt 42 auf, welcher das zweite Luftöffnungselement 16 umfasst. Das Gehäuse 12 weist einen Überlappungsabschnitt 44 auf, an welchem das erste Gehäuseteil 18 das zweite Gehäuseteil 20 überlappt. Der erste Schnittstellenabschnitt 40 weist einen maximalen Außendurchmesser auf, welcher kleiner ist als der maximale Außendurchmesser des Überlappungsabschnitts 44 und des zweiten Schnittstellenabschnitts 42. Der Überlappungsabschnitt 44 ist entlang der Längsachse 30 betrachtet zwischen dem ersten und dem zweiten Schnittstellenabschnitt 40, 42 angeordnet. Der Überlappungsabschnitt 44 weist einen sich in Richtung zum zweiten Schnittstellenabschnitt 40 radial konisch aufweitenden Abschnitt 46 auf, welcher einen maximalen Außendurchmesser des Gehäuses 12 von einem maximalen Außendurchmesser des ersten Schnittstellenabschnitts in etwa auf einen maximalen Außendurchmesser des zweiten Schnittstellenabschnitts 42 bringt.

Der erste Schnittstellenabschnitt 40 weist an der Außenseite eine Entlastungsnut 50 auf, welche als eine umlaufende Vertiefung ausgebildet ist und benachbart zu dem erste Luftöffnungselement 14 angeordnet ist. Die Entlastungsnut 50 bildet einen ringförmig abstehenden Anschlussbereich um das erste Luftöffnungselement 14. Die Entlastungsnut 50 ist als ein radialer Außeneinschnitt ausgeführt und parallel zu dem ersten Luftöffnungselement angeordnet. Der erste Schnittstellenabschnitt 40 weist eine an der Innenseite eine Vielzahl von nebeneinander angeordneten und zueinander beabstandeten Halterippen 52 auf. Die Halterippen 52 begrenzen den ersten Schnittstellenabschnitt 40 von innen und ermöglichen ein effektives und flexibles Halten eines in den ersten Schnittstellenabschnitt 40 hineinragenden Stutzens 54 beispielsweise einer Handwerkzeugmaschine, insbesondere einer Schleifmaschine 56. Die Halterippen 52 sind um die Längsachse 30 umlaufend ausgebildet und erstrecken sich radial zur Längsachse 30 hin. Die Halterippen 52 sind als nach innen abstehende Halteerhöhungen ausgebildet.

Der zweite Schnittstellenabschnitt 42 weist zwei weitere benachbart zu dem zweiten Luftöffnungselement 16 angeordnete Befestigungsöffnungen 58 auf. Die Befestigungsöffnungen 58 sind als Ausnehmungen durch das Gehäuse 12 bzw. dem zweiten Gehäuseteil 20 ausgebildet und um ca. 180° um die Längsachse 30 zueinander beabstandet. Die Befestigungsöffnungen 58 dienen dazu einen Saugschlauch 70 einer Absaugvorrichtung 80, insbesondere eines Industriesaugers, aufzunehmen und mittels geeigneter Befestigungselemente 72, insbesondere formschlüssig, zu halten. Dadurch kann der Saugschlauch 70 von innen in den zweiten Schnittstellenabschnitt eingeschoben werden und mittels sich radial von der Längsachse weg gerichteten beweglich gelagerten Befestigungselementen 72 in oder an den Befestigungsöffnungen 58 gehalten werden.

Das erste Gehäuseteil 18 ist gegenüber dem zweiten Gehäuseteil 20 form-und/oder kraftschlüssig gelagert. Insbesondere weist das zweite Gehäuseteil 20 ein sich um die Längsachse 30 erstreckendes Schnappelement 60 auf, welches gegenüber dem zweiten Gehäuseteil 20 radial nach außen absteht. Das Schnappelement 60 ist in einer Einsteckrichtung angewinkelt (Winkelfläche 62), um eine Schnappverbindung in der Einsteckrichtung zu ermöglichen. Das Schnappelement 60 weist in einer von der Einsteckrichtung abgewandten Richtung einen Anschlag 64 (senkrechte Anschlagfläche 64) auf, um ein Lösen der Schnappverbindung zu erschweren oder zu verhindern. Das Schnappelement 60 ist in einem Verbindungszustand dazu vorgesehen, in eine innenliegende und um die Längsachse 30 umlaufende Aufnahmenut 66 des zweiten Gehäuseteils 20 zu greifen. Vorliegend sind zwei Schnappelemente 60 vorgesehen, welche in zwei Aufnahmenuten 66 greifen. Die Schnappelemente 60 sind entlang der Längsachse 30 betrachtet, insbesondere unmittelbar, vor und, insbesondere unmittelbar, hinter dem vierten Luftöffnungselement 32 angeordnet. Das vierte Luftöffnungselement 32 ist zwischen den beiden Schnappelementen 60 angeordnet. Die Schnappelemente 60 sind jeweils beabstandet zu dem vierten Luftöffnungselement 32 angeordnet.

Die Aufnahmenuten 66 sind entlang der Längsachse 30 betrachtet, insbesondere unmittelbar, vor und, insbesondere unmittelbar, hinter dem dritten Luftöffnungselement 34 angeordnet. Das dritte Luftöffnungselement 34 ist zwischen den beiden Aufnahmenuten 66 angeordnet. Die Aufnahmenuten 66 sind jeweils beabstandet zu dem vierten Luftöffnungselement 32 angeordnet.

Das erste Gehäuseteil 18 begrenzt das erste Luftöffnungselement 14 um die Längsachse herum. Das erste und das zweite Luftöffnungselement 14 sind im Schnitt kreisrund ausgebildet. Das zweite Gehäuseteil 20 begrenzt das zweite Luftöffnungselement 16 um die Längsachse herum. Das zweite Luftöffnungselement 16 ist an einer von dem erste Luftöffnungselement 14 abgewandten Seite der Druckbegrenzungsvorrichtung 10 angeordnet.

## Patentansprüche

1. Druckbegrenzungsvorrichtung, insbesondere Druckbegrenzungsadapter, mit einem Gehäuse (12), mit einem ersten Luftöffnungselement (14) und mit einem zweiten Luftöffnungselement (16), wobei das erste Luftöffnungselement (14) an einem ersten Gehäuseteil (18) angeordnet ist, wobei das zweite Luftöffnungselement (16) an einem von dem ersten Gehäuseteil (18) verschiedenen zweiten Gehäuseteil (20) angeordnet ist, **gekennzeichnet durch** eine Luftdruckbegrenzungseinheit (22) zur Begrenzung eines Luftdrucks, insbesondere mittels dem ersten Gehäuseteil (18) und dem zweiten Gehäuseteil (20).

2. Druckbegrenzungsvorrichtung nach Anspruch 1, **dadurch gekennzeichnet, dass** die Luftdruckbegrenzungseinheit (22) zur Begrenzung eines Überdrucks ausgebildet ist.

3. Druckbegrenzungsvorrichtung nach einem der vorhergehenden Ansprüche, **dadurch gekennzeichnet, dass** die Luftdruckbegrenzungseinheit (22) ein, insbesondere drittes, Luftöffnungselement (32) zur Begrenzung eines Luftdrucks aufweist, wobei das erste Luftöffnungselement (14) und/oder das zweite Luftöffnungselement (16) gegenüber dem dritten Luftöffnungselement (32), insbesondere um mindestens 300%, vorzugsweise mehr als 400%, bevorzugt mehr als 600%, weiter bevorzugt mehr als 1000%, größer ist.

4. Druckbegrenzungsvorrichtung nach einem der vorhergehenden Ansprüche, **dadurch gekennzeichnet, dass** die Luftdruckbegrenzungseinheit (22) ein, insbesondere einstellbares, drittes Luftöffnungselement (32) aufweist, welches von den beiden, insbesondere das erste Luftöffnungselement (14) und/oder das zweite Luftöffnungselement (16) begrenzenden, Gehäuseteilen (18, 20) gebildet ist.

5. Druckbegrenzungsvorrichtung nach einem der vorhergehenden Ansprüche, **dadurch gekennzeichnet, dass** die Luftdruckbegrenzungseinheit (22) ein, insbesondere einstellbares, viertes Luftöffnungselement (34) aufweist, welches von den beiden, insbesondere das erste Luftöffnungselement (14) und/oder das zweite Luftöffnungselement (16) begrenzenden, Gehäuseteilen (18, 20) gebildet ist.

6. Druckbegrenzungsvorrichtung nach einem der vorhergehenden Ansprüche, **dadurch gekennzeichnet, dass** das vierte Luftöffnungselement (34) an das dritte Luftöffnungselement (32) angepasst ist und/oder in zumindest einem Öffnungszustand einander überdecken bzw. überlappen und/oder in zumindest einem Schließzustand einander nicht überdecken bzw. nicht überlappen.

7. Druckbegrenzungsvorrichtung nach einem der vorhergehenden Ansprüche, **dadurch gekennzeichnet, dass** die Luftdruckbegrenzungseinheit (22), insbesondere das dritte und/oder vierte Luftöffnungselement (32, 34), zwischen dem ersten Luftöffnungselement (14) und dem zweiten Luftöffnungselement (16) angeordnet ist.

8. Druckbegrenzungsvorrichtung nach einem der vorhergehenden Ansprüche, **dadurch gekennzeichnet, dass** die Luftdruckbegrenzungseinheit (22) ein, insbesondere getrennt von dem dritten Luftöffnungselement (32) ausgebildetes, Verschlusselement zur Regelung des Luftdrucks aufweist, wobei das Verschlusselement als eine Hand, insbesondere ein Finger, eines Bedieners ausgebildet ist.

9. Druckbegrenzungsvorrichtung nach einem der vorhergehenden Ansprüche, **dadurch gekennzeichnet, dass** das Verschlusselement als das erste Gehäuseteil (18) ausgebildet ist, wobei das erste Gehäuseteil (18) gegenüber dem zweiten Gehäuseteil (20) drehbeweglich gelagert und überlappend angeordnet ist.

10. Druckbegrenzungsvorrichtung nach einem der vorhergehenden Ansprüche, **dadurch gekennzeichnet, dass** das erste Luftöffnungselement (14) dazu vorgesehen ist, mit einer Unterdruckerzeugungseinheit, insbesondere einer Saugvorrichtung, verbunden zu sein und/oder dass das zweite Luftöffnungselement (16) dazu vorgesehen ist, mit einer Überdruckerzeugungseinheit, insbesondere einer Pumpvorrichtung, verbunden zu sein.

11. System aus einer Druckbegrenzungsvorrichtung nach einem der vorhergehenden Ansprüche, einer Unterdruckerzeugungseinheit, insbesondere einer Saugvorrichtung, und einem Saugschlauchelement zur strömungstechnischen Verbindung der Druckbegrenzungsvorrichtung mit der Saugvorrichtung.
